Europäisches Patentamt

European Patent Office

Office européen des brevets

(11) Numéro de publication : **0 313 489 B1**

# (12) FASCICULE DE BREVET EUROPEEN

(45) Date de publication du fascicule du brevet :
**26.02.92 Bulletin 92/09**

(51) Int. Cl.⁵ : **C02F 1/26,** C02F 1/58,
B01D 11/04

(21) Numéro de dépôt : **88440087.0**

(22) Date de dépôt : **17.10.88**

(54) **Procédé et installation de traitement des eaux ammoniacales.**

(30) Priorité : **23.10.87 FR 8714887**

(43) Date de publication de la demande :
**26.04.89 Bulletin 89/17**

(45) Mention de la délivrance du brevet :
**26.02.92 Bulletin 92/09**

(84) Etats contractants désignés :
**AT BE CH DE ES GB IT LI NL SE**

(56) Documents cités :
**DE-A- 939 268
DE-A- 2 527 983
FR-A- 1 009 865
GB-A- 954 926
US-A- 3 220 203
US-A- 3 507 782
US-A- 4 547 293**

(73) Titulaire : **BEFS TECHNOLOGIES S.A.
7, rue Gay-Lussac
F-68100 Mulhouse (FR)**

(72) Inventeur : **Lassiaz, Charles
1, rue de Panorama
F-68440 Zimmersheim (FR)**
Inventeur : **Schwartz, Gilbert
20, Impasse Montreville
F-54000 Nancy (FR)**

(74) Mandataire : **Aubertin, François
Cabinet Lepage & Aubertin Innovations et
Prestations 4, rue de Haguenau
F-67000 Strasbourg (FR)**

## Description

L'invention concerne un procédé et une installation de traitement des eaux, dites ammoniacales, comportant des impuretés à caractère, d'une part, minéral, telles que l'ammoniaque à l'état libre ou associé sous forme de sulfures, du cyanure, des thiosulfates, des thiocyanates, des chlorures et autres et, d'autre part, organique, notamment des phénols et des hydrocarbures aromatiques, polycycliques ou HAP présents à l'état soluble et insoluble.

La présente invention trouvera son utilité dans les industries comportant des eaux résiduaires, dites eaux ammoniacales présentant un caractère polluant non négligeable.

Ainsi, le procédé de traitement et l'installation qui sont décrits plus loin, concernent, plus particulièrement, les cokeries dont les rejets d'eau polluante contiennent les impuretés citées ci-dessus.

Les traitements actuellement appliqués à ces eaux résiduaires consistent en une opération de stripping permettant d'éliminer l'ammoniaque libre, le dioxyde de carbone $Co_2$, l'acide sulfhydrique $H_2S$ et une très faible quantité d'impuretés organiques. Cette opération de stripping est généralement suivie par un traitement biologique, dans le but d'éliminer les phénols qui sont des produits chimiques particulièrement toxiques.

Ainsi, il est connu, par le document DE-A-2.527.983 un procédé de traitement des eaux résiduaires dites ammoniacales de manière à prélever les phénols contenus dans ces dernières. Ce procédé consiste, en fait, en une extraction au solvant organique, à faible point d'ébullition, exécutée dans une ambiance sous pression.

Par ailleurs, le procédé connu par le document DE-A-939.268, consiste à éliminer les phénols contenus dans les eaux résiduaires, au travers d'une extraction au solvant organique subdivisée en deux phases, chacune étant menée en continu. Ce procédé ne permet, effectivement, que de traiter les phénols et non les HAP et, dans tous les cas, conduit à des résultats insuffisants.

La législation en vigueur dans le passé autorisait les industriels à rejeter dans la nature ces eaux ayant subies des traitements relativement élémentaires et conservant, pour autant, une quantité considérable d'agents toxiques.

Cependant, en raison des dégradations importantes de l'environnement et du taux croissant de la pollution, il s'est avéré indispensable de traiter les eaux résiduaires quelle que soit leur origine, de manière plus fondamentale pour éliminer en totalité ou quasi-totalité les impuretés qu'elles contiennent.

Ceci revient, dans le cadre des eaux ammoniacales, non seulement à réduire à néant leur teneur en ammoniaque libre, en $H_2S$, en $CO_2$, en cyanure, et en phénols mais également à éliminer les autres polluants et, notamment, l'ensemble des hydrocarbures aromatiques polycycliques dont on connaît les propriétés cancérigènes.

Or, les procédés décrits dans les documents antérieurs, cités ci-dessus, ne permettent pas de satisfaire à de telles conditions. Il y est d'ailleurs suggéré dans l'un de ces documents de procéder à un traitement biologique supplémentaire pour atteindre un degré de pureté acceptable.

En effet, s'il est possible d'extraire, de l'eau à traiter la part des hydrocarbures aromatiques polycycliques insolubles par un procédé d'extraction au solvant organique, il n'en est pas de même de ceux dissous dans cette eau.

Pour des raisons de commodité, ces hydrocarbures aromatiques polycycliques seront dénommés les HAP tout au long de la description qui va suivre.

La présente invention a pour but de proposer un procédé de traitement de ces eaux dites ammoniacales, qui non seulement permet de dépolluer totalement ces dernières, mais présente, en outre, un rendement énergétique des plus favorables.

L'invention telle qu'elle est caractérisée dans les revendications résout le problème consistant à créer un procédé de traitement des eaux dites ammoniacales comportant des impuretés à caractère, d'une part, minéral, telles que l'ammoniaque à l'état libre ou associé sous forme de sulfures, du cyanure, des thiosulfates, des thiocyanates ,des chlorures et autres et, d'autre part, organique, notamment, les phénols et des hydrocarbures aromatiques polycycliques ou HAP présents à l'état soluble et insoluble, ce procédé consistant en ce que:

– on effectue une opération d'extraction au solvant, subdivisée en deux phases distinctes dont l'une consiste en une extraction en discontinu à un ou plusieurs étages et l'autre en une extraction en continu en un seul étage;

– on poursuit le traitement par une opération de cristallisation d'où, finalement, est prélevée l'eau traitée déchargée des impuretés.

L'invention concerne également une installation permettant de mettre en oeuvre ce procédé de traitement des eaux ammoniacales, caractérisée en ce qu'elle est composée :

– d'une unité d'extraction au solvant formée par un ensemble d'extraction en discontinu à un ou plusieurs étages et d'un dispositif d'extraction en continu à un seul étage ;

– d'un circuit de régénération du solvant comportant une colonne de distillation d'où est prélevé un résidu correspondant aux HAP et autres impuretés organiques extraites des eaux ammoniacales ;

– d'une colonne de stripage pour éliminer l'ammoniaque à l'état libre, l'$H_2S$, le $Co_2$ et autres ;

– d'une unité de cristallisation assurant, d'une part, l'élimination des impuretés restantes à fortes concentrations de sels et, d'autre part, la production d'eau purifiée ayant perdue toute agressivité chimique.

Les avantages obtenus grâce à cette invention consistent, essentiellement, en ce que, d'une part, l'installation particulière fonctionne suivant un bilan énergétique tout à fait avantageux pour l'utilisateur. D'autre part, le procédé de traitement permet le recyclage de l'eau traitée, par exemple dans des tours d'extinction, et la valorisation d'un certain nombre des agents polluants qui ont été prélevés. Par ailleurs, il évite tout traitement biologique supplémentaire en permettant d'atteindre un degré de pureté de l'eau traitée de l'ordre de 99,99 %.

L'invention est exposée ci-après plus en détail à l'aide de dessins représentant seulement un mode d'exécution.

– La figure 1 représente un schéma de principe du procédé de traitement des eaux ammoniacales, conforme à l'invention ;

– la fiyure 2 représente une vue schématisée de l'unité d'extraction et du circuit de régénération du solvant ;

– la figure 3 représente un schéma de principe de l'extraction au solvant ;

– la figure 4 représente schématiquement le principe de la cristallisation ;

– la figure 5 représente une vue schématisée de l'unité de cristallisation fonctionnant selon le principe représenté dans la figure 4.

Le procédé de traitement conforme à l'invention et tel qu'il est décrit ci-dessous, s'applique, plus particulièrement, à des eaux résiduaires, dites eaux ammoniacales comprenant un certain nombre d'impuretés à caractère minéral et organique.

Ainsi, ces eaux ammoniacales contiennent de l'ammoniaque à l'état libre ou associé sous forme de sulphures, des cyanures, des thiosulfates, des thiocyanates, ou encore des phénols, des hydrocarbures aromatiques polycycliques ou HAP.

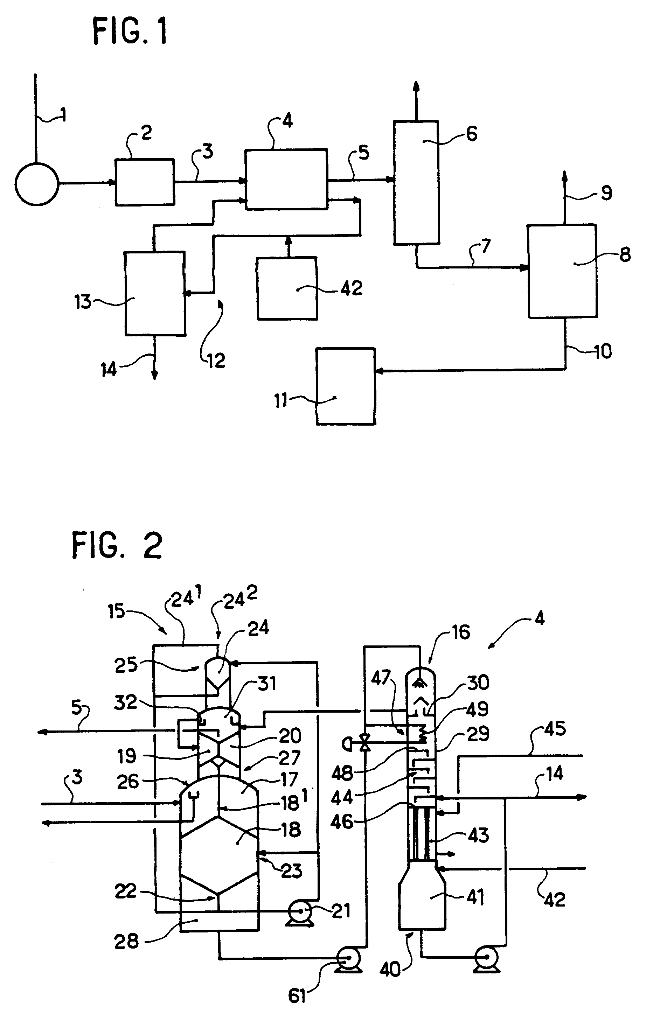

On se réfère, plus particulièrement, à la figure 1.

Tel que visible dans cette dernière, représentant schématiquement le principe général du procédé de traitement, conforme à l'invention, les eaux résiduaires ou ammoniacales 1 provenant, par exemple, d'une cokerie, traversent, initialement, une unité de filtration 2 constituée généralement par un simple filtre à gravier.

Au-delà de cette première étape, dont l'efficacité est relativement réduite étant donné qu'elle ne permet de retenir que les impuretés à caractère grossier, les eaux ammoniacales filtrées 3 sont orientées, conformément à l'invention, vers une unité d'extraction au solvant 4.

En ce qui concerne le solvant utilisé, il s'est avéré que le cyclohexane, le benzène et le benzole présentaient les caractères requis pour extraire les HAP selon un rendement tout à fait appréciable. Toutefois, il est à noter que les performances les meilleures, sont atteintes à l'aide du benzène et du benzole, notamment, lorsque ceux-ci sont élevés en tempèrature à environ 50 à 70 degrés Celsius.

Le choix entre ces deux solvants est fonction de critères économiques. On remarque, à cet effet, que le benzole présente un intérêt particulier sur ce plan dans le cadre des cokeries équipées d'une unité de débenzolage.

Après cette opération d'extraction au solvant qui peut être composée d'un nombre variable d'étages, l'eau semi-épurée 5 est introduite dans une colonne classique de stripage 6. L'intérêt essentiel de cette dernière consiste à éliminer globalement l'ammoniaque libre ainsi que l'acide sulfhydrique $H_2S$ et le gaz carbonique $CO_2$.

A ce niveau du procédé de traitement, conforme à l'invention, l'eau 7 est déchargée d'environ 60 % des phénols par rapport à la configuration initiale.

Dans le but d'éliminer le restant des produits polluants, le procédé de traitement consiste à injecter l'eau 7 provenant de la colonne de stripage 6 dans une unité de cristallisation 8. A noter que les rejets 9 extraits au niveau de cette dernière sont à forte concentration de sels et pourront, de ce fait, être transférés vers une unité de sulfatation et contribuer à l'apport en azote nécessaire pour l'obtention d'un engrais de qualité.

Par ailleurs, ayant perdu en totalité son agressivité chimique, l'eau purifiée 10 peut être recyclée, par exemple, dans une tour d'extinction 11.

Sur ce parcours du traitement des eaux résiduaires dites ammoniacales, on trouve également un circuit de régénération du solvant 12 dans lequel intervient essentiellement une colonne de distillation 13 assurant la régénération du solvant et le prélèvement d'un résidu 14 correspondant aux HAP et autres produits organiques extraits des eaux ammoniacales. Dans le but d'atteindre un degré de pollution quasiment nul, ce résidu de distillation peut être renvoyé soit dans l'unité de débenzolage, soit au goudron.

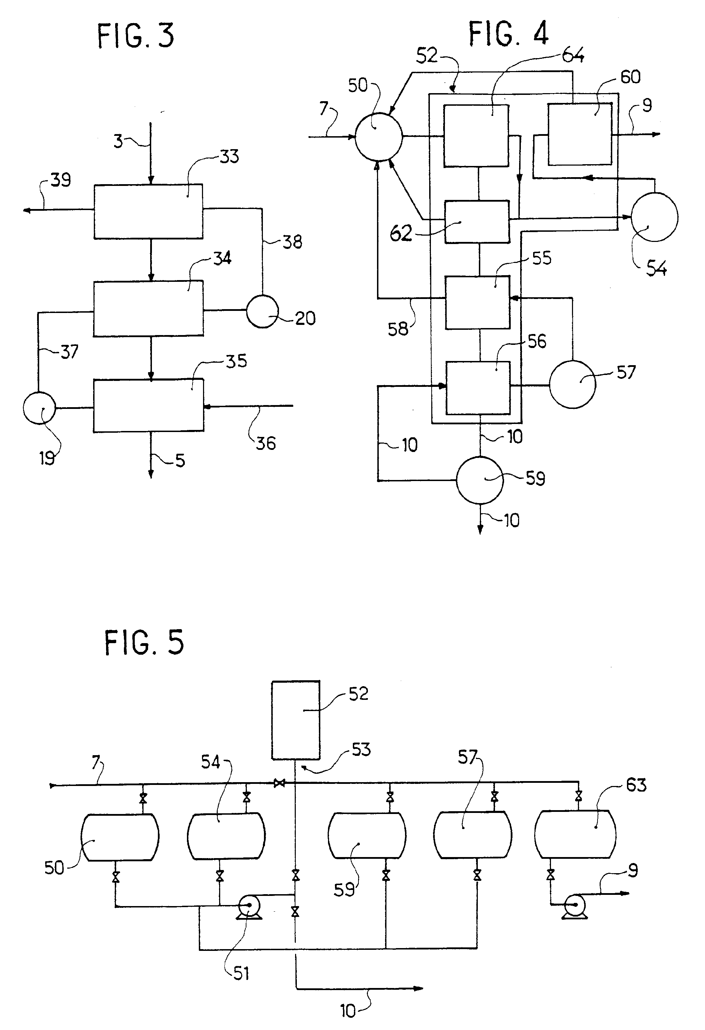

Les figures 2 et 3 concernent, plus spécialement, l'unité d'extraction au solvant 4 et son fonctionnement en parallèle avec le circuit de régénération 12.

Selon une caractéristique de l'invention, cette unité d'extraction 4 est formée, d'une part, par un ensemble d'extraction en discontinu 15 composé d'un ou de plusieurs étages et, d'autre part, d'un dispositif d'extraction en continu 16 ne comportant qu'un seul étage.

Le principe de fonctionnement s'appliquant à l'ensemble d'extraction en discontinu 15 consiste, initialement, à introduire l'eau ammoniacale filtrée 3 dans un réservoir de stockage 17 d'où elle s'écoule, par gravité, dans une enceinte d'extraction 18. Dans cette dernière est également introduite une quantité déterminée de solvant provenant d'un des réservoirs 19,20 surmontant le réservoir de stockage 17 d'eau ammoniacale filtrée 3.

Une pompe de recyclage 21 crée une agitation dans l'enceinte d'extraction 18 en prélevant le mélange eau/solvant à la partie inférieure 22 de cette dernière et en le réinjectant dans sa partie médiane 23. Cette agitation favorise considérablement le contact de l'eau et du solvant dont il convient de préciser que leur température est élevée à environ 50 à 70 degrés Celsius de manière à améliorer le rendement de l'extraction.

Au cours de cette agitation, la pompe de recyclage 21 permet, simultanément, de prélever de l'enceinte d'extraction 18 le mélange eau/solvant, selon un faible débit, pour l'amener dans un réservoir-décanteur 24 situé à l'extrémité supérieure 25 de la colonne 26 constituant l'ensemble d'extraction en discontinu 15. Une conduite $24_1$, reliée à la partie $24_2$ du réservoir-décanteur 24, renvoie le trop-plein de mélange eau/solvant, s'écoulant de ce dernier, dans l'enceinte d'extraction 18.

En arrêtant le fonctionnement de la pompe de recyclage 21, on permet au mélange contenu dans cette enceinte d'extraction 18 de se décanter, de manière à former trois phases distinctes, à savoir, l'eau traitée, le solvant et une phase de constituants insolubles situés au niveau de l'interface.

Selon une caractéristique de l'invention, ce solvant et la phase insoluble sont prélevés à la partie supérieure $18_1$, de l'enceinte d'extraction 18 suite à une poussée ascendante provoquée par l'injection d'eau dans ladite enceinte d'extraction 18 au niveau de sa partie inférieure 22. Avantageusement, cette eau permettant d'éliminer le solvant et la phase insoluble présente une concentration d'impuretés sensiblement égale à l'eau déjà contenue dans l'enceinte d'extraction 18 et provient du réservoir-décanteur 24 d'où elle s'écoule par simple gravité. Le solvant et la phase insoluble ainsi éliminés sont évacués dans un des réservoirs 19,20 situés dans la partie médiane 27 de la colonne 26.

Le cycle décrit ci-dessus correspond à un étage de la phase d'extraction en discontinu. De ce fait, pour passer à l'étage suivant, on assure à nouveau l'écoulement par gravité dans l'enceinte d'extraction 18 d'une quantité donnée de solvant provenant d'un des réservoirs 19,20 et présentant une qualité supérieure au solvant précédemment évacué.

En sortie du dernier étage de cette phase d'extraction en discontinu, l'eau traitée s'écoule dans un réservoir 28 sous-jacent à l'enceinte d'extraction 18 et le cycle peut recommencer.

La phase d'extraction suivante consiste en une extraction en continu à un étage s'effectuant en tête de colonne de distillation 29 dans laquelle est régénéré le solvant provenant de l'ensemble d'extraction en discontinu 15. A cet effet, on dispose d'une pompe de relevage 61 prélevant l'eau contenue dans le réservoir 28 dans le but de la pulvériser en tête de colonne de distillation 29 au-dessus d'un plateau 30. On assure, ainsi, la mise en contact de cette eau avec la vapeur de solvant remontant dans ladite colonne de distillation 29. Cette dernière constitue, de ce fait, le dispositif d'extraction en continu 16 cité plus haut dans la description.

Il convient, par ailleurs, de prélever en continu le mélange eau/solvant du plateau 30 de manière à l'introduire à nouveau dans un décanteur 31 disposé dans la colonne d'extraction 26 et situé immédiatement au-dessus des réservoirs de solvant 19,20.

Au bas de décanteur 31 est prélevée l'eau traitée et correspondant à l'eau semi-épurée, portant la référence 5, dans le schéma de principe du procédé de traitement des eaux ammoniacales représenté dans la figure 1.

Par ailleurs, à la partie supérieure 32 du décanteur 31 est récupéré le solvant et une faible quantité de phase insoluble de manière à les introduire dans un des réservoirs 19,20 situées en contrebas.

Cette opération d'extraction en continu à un seul étage utilise un système habituellement dénommé un quensch.

Dans la figure 3 est représenté le schéma de principe d'une extraction au solvant à trois étages 33,34,35 dont le dernier étage 35 correspond à l'extraction en continu effectuée en tête de la colonne de distillation 29. Sur ce schéma, il apparaît que le solvant effectue un trajet en sens opposé à celui de l'eau ammoniacale à traiter. Ainsi, le solvant régénéré 36 provenant de la colonne de distillation 29 est mélangé à l'eau, issue de l'avant-dernier étage d'extraction 34, puis prélevé à nouveau du décanteur 31 de manière à l'introduire dans un réservoir de solvant 19. A ce stade, le solvant 37 est chargé d'une petite quantité d'impuretés ce qui lui permet d'intervenir dans l'avant-dernier étage d'extraction 34 pendant le cycle suivant.

En sortie de cet étage 34 de l'extraction en discontinu, le solvant 38 est introduit dans le second réservoir 20 et présente une concentration d'impuretés supérieure. Ce même solvant 38 va entrer en action au niveau du premier étage d'extraction 33 au cours du cycle suivant. En sortie de ce premier étage d'extraction 33, le solvant à forte concentration d'impuretés 39 est envoyé dans le circuit de régénération 12.

Ainsi, la règle du principe de fonctionnement de l'extraction au solvant, selon le procédé de traitement conforme à l'invention, s'énonce comme suit : au Nième étage d'extraction, le solvant utilisé provient du N + lième étage du cycle d'extraction précédent.

Pour cette raison, la colonne 26 est munie d'autant de réservoirs de solvant 19,20 que d'étages de la phase d'extraction en discontinu. Etant donné que ce nombre d'étages varie en fonction de la concentration en impuretés des eaux ammoniacales, on pourvoit la colonne 26 d'un nombre suffisant de réservoirs du solvant 19,20 de manière à pouvoir moduler aisément les paramètres de l'extraction et conférer une certaine souplesse à l'installation.

La colonne de distillation 29 insérée dans le circuit de régénération 12 est d'un type tout à fait classique hormis qu'elle permet de réaliser un quensch en tête de colonne sur l'eau provenant du dernier étage de la phase d'extraction en discontinu. Ainsi, cette colonne de distillation 29 comporte, à sa base 40, une capacité 41 contenant le solvant à régénérer et dans laquelle s'effectue l'appoint de solvant 42. Ladite capacité 41 est surmontée d'un évaporateur à film tombant 43 puis d'une série de plateaux de distillation 44. L'évaporateur à film tombant 43 est chauffé à l'aide de vapeur 45 assurant l'apport en énergie nécessaire à la distillation. Par ailleurs, sur le premier plateau 46 situé à la partie inférieure de cette dernière est prélevé le résidu 14 correspondant aux HAP et une part des phénols (environ 60 %).

A noter également, la présence d'un déphlegmateur 47 placé entre le dernie plateau 48 en haut de colonne de distillation 29 et le plateau 30 sur lesquel s'opère le dernier étage d'extraction au solvant. Un tel déphlegmateur 47 consiste, plus exactement, à faire traverser dans un serpentin 49, logé dans la colonne de distillation 29, un débit donné d'eau provenant du réservoir 28 en bas de colonne d'extraction 26. Au contact de serpentin 49, présentant une température sensiblement égale à celle de l'eau (environ 50 degrés Celsius), une certaine quantité de solvant à l'état vapeur vient à se condenser créant le reflux nécessaire au bon fonctionnement de l'opération de distillation. Ceci permet, simultanément, de relever la température de l'eau sur laquelle sera réalisé le quensch.

Les avantages obtenus grâce à cette installation, conforme à l'invention, et au procédé de traitement par extraction au solvant présentant une phase en discontinu et une phase en continu consistent en ce qu'ils permettent de remédier au problème que pose la formation d'une phase de constituants insolubles au niveau de l'interface eau-solvant. En effet, cette phase d'insolubles dans un procédé d'extraction en continu à n étage provoquerait, rapidement, l'engorgement de la colonne d'extraction et un arrêt du fonctionnement de l'installation.

Par ailleurs, l'installation, telle qu'elle a été décrite ci-dessus, présente une souplesse considérable due au nombre d'étages de la phase d'extraction en discontinu modulable en fonction de la concentration des impuretés de l'eau ammoniacale sortant de l'unité de filtration 2. Il est, en effet, à remarquer que cette dernière n'est pas en mesure de délivrer une eau de qualité constante et, ce, en raison de la variation de l'état du filtre à gravier.

A cette souplesse s'ajoute la possibilité d'automatiser l'installation et d'assurer sa gestion par un micro-processeur.

En sortie de cette unité d'extraction au solvant 4, l'eau semi-épurée 5 est introduite dans une colonne classique de stripage 6 permettant d'éliminer, essentiellement, l'ammoniaque libre, l'acide sulfhydrique et le gaz carbonique. En contrebas de cette colonne de stripage 6, l'eau 7 est orientée vers une unité de cristallisation 8 dont le but est d'eliminer les impuretés restantes. A noter, qu'en raison des performances de l'unité de cristallisation 8, il est possible, dans de nombreux cas, de supprimer la colonne de stripage 6 dans l'installation.

Les figures 4 et 5 sont relatives, d'une part, à un schéma de principe de ce procédé de traitement de l'eau par cristallisation et, d'autre part, au schéma de l'installation permettant la mise en oeuvre de ce procédé.

Plus précisément, ce dernier consiste à stocker l'eau provenant de la colonne de stripage 6 dans un réservoir 50. Puis, une quantité déterminée est prélevée de ce dernier par l'intermédiaire d'une pompe 51 de manière à injecter cette eau dans un raffineur 52 où se produit la cristallisation. Celle-ci débute par un refroidissement du raffineur 52 au moyen d'un fluide thermique dans le but de constituer un réseau cristallin dans l'appareil. Après avoir atteint un taux volumique de cristaux donné, on prélève à la partie inférieure 53 du raffineur 52 la phase liquide encore contenue dans ce dernier et chargée d'impuretés. Cette étape est dénommée l'opération d'égouttage 64. Ce liquide est ensuite stocké dans un réservoir 54 et correspond aux rejets. Par un apport de chaleur, on procède, ensuite, à une fusion partielle 62 de la phase solide et on extrait, du raffineur 52, le liquide ainsi obtenu pour le stocker, tout comme précédemment, dans le réservoir 54 contenant les rejets. Cette opération s'appelle la phase de ressuage et améliore les performances du lavage des cristaux constituant l'étape suivante du procédé. A noter que le liquide en provenance de l'opération d'égouttage 64 et de la fusion partielle 62 peut encore être renvoyé dans le réservoir 50 et mélangé à l'eau d'alimentation 7.

Ainsi, ce lavage des cristaux a pour intérêt d'éliminer le film liquide entourant ces derniers et est effectué au moyen d'une partie de l'eau de production purifiée 10.

Bien entendu, le nombre de lavages ainsi réalisé est déterminé en fonction du degré de pureté à atteindre. Ainsi, le schéma représenté dans le cadre de la figure 4 s'applique à une unité de cristallisation 8 comportant deux séquences de lavage 55, 56. Tel que représenté sur ce schéma, l'eau purifiée 10 sert plus exactement, à la deuxième séquence de lavage 56 au cours d'un premier cycle de cristallisation. Cette eau comportant une partie d'impuretés est ensuite récupérée et stockée dans un réservoir intermédiaire 57. Puis, elle est réinjectée à nouveau dans le raffineur 52 pour effectuer la première séquence de lavage 55 au cours du cycle de cristallisation suivant.

Cette eau 58 qui s'est chargée d'impuretés au cours des différentes séquences de lavage 55,56 est ensuite renvoyée dans le réservoir de stockage 50 contenant l'eau d'alimentation 7 provenant de la colonne de stripage 6.

Bien entendu, une telle unité de cristallisation peut comporter un nombre plus important de séquences de lavage. Dans ces conditions, la règle applicable s'énonce comme suit: à la Nième séquence, l'eau servant au lavage provient de la N + lième séquence de lavage du cycle de cristallisation précédent. De ce fait, une unité de cristallisation 4 dans laquelle s'effectuent plusieurs séquences de lavage comportera, nécessairement, un nombre de réservoirs intermédiaires 57 égal au nombre de séquences de lavage moins un.

Ayant atteint le degré de pureté désiré, les cristaux contenus dans le raffineur 52 sont fondus par réchauffement de ce dernier puis envoyés dans un réservoir de stockage 59 contenant l'eau de production purifiée 10. Cette eau ayant perdu toute son agressivité chimique, elle peut trouver son utilité soit dans une tour d'extinction 11 ou encore, tel que décrit ci-dessus, au cours de différentes séquences de lavage.

Cette unité de cristallisation 8 peut également servir à effectuer une concentration 60 de l'eau chargée en impuretés, prélevée du raffineur 52 durant la phase d'égouttage et contenue dans le réservoir 54. Dans ces conditions, l'unité de cristallisation 8 sera munie d'un second réservoir 63 dans lequel seront stockés les rejets 9 à forte concentration d'impuretés.

Finalement, ces rejets 9 peuvent être envoyés vers une unité de sulfatation et contribuer à l'apport d'azote et de chlorure pour la fabrication d'engrais.

Les principaux avantages obtenus grâce à cette invention consistent en ce que l'installation et le procédé de traitement des eaux ammoniacales permettent, d'une part, de dépolluer en quasi totalité, ces derniers, tout en réduisant au strict minimum les dépenses énergétiques. D'autre part, ils offrent la possibilité de recycler presque toute la production de rejets.

**Revendications**

1. Procédé de traitement des eaux, dites ammoniacales, comportant des impuretés à caractère, d'une part, minéral, telles que l'ammoniaque à l'état libre ou associé sous forme de sulfures, du cyanure, des thiosulfates, des thiocyanates, des chlorures et autres, et, d'autre part, organique, notamment, les phénols et les hydrocarbures aromatiques polycycliques ou HAP présents à l'état soluble et insoluble, caractérisé en ce que :
   – on effectue une opération d'extraction au solvant, subdivisée en deux phases distinctes dont l'une consiste en une extraction en discontinu à un ou plusieurs étages et l'autre en une extraction en continu à un seul étage ;
   – on poursuit le traitement par une opération de cristallisation d'où, finalement, est prélevée l'eau traitée déchargée des impuretés.

2. Procédé de traitement des eaux ammoniacales selon la revendication 1, caractérisé par le fait que la phase d'extraction en discontinu consiste :
   – à alimenter une enceinte d'extraction (18) en eau ammoniacale filtrée (3) ;
   – à introduire dans cette même enceinte d'extraction (18) une quantité préétablie de solvant, tel que le cyclohexane, le benzène ou le benzol, contenu dans des réservoirs (19,20) ;
   – à agiter le mélange eau/solvant ainsi réalisé ;
   – à prélever, selon un faible débit, au cours de cette agitation, une quantité de mélange eau/solvant pour l'amener dans un réservoir-décanteur (24) situé au-dessus de l'enceinte d'extraction (18) ;
   – à laisser décanter le mélange dans l'enceinte d'extraction (18) de manière à former trois phases distinctes, à savoir, l'eau traitée, le solvant et une phase de constituants insolubles située au niveau de l'interface ;
   – à prélever le solvant chargé d'impuretés et la phase d'insolubles par injection d'eau au niveau de la partie inférieure (22) de l'enceinte d'extraction (18), cette eau provenant du réservoir-décanteur (24) et présentant une concentration en impuretés sensiblement égale à l'eau traitée contenue dans ladite enceinte d'extraction (18) ;
   – à introduire dans des réservoirs (19,20) surmontant l'enceinte d'extraction (18) le solvant et la phase d'insolubles ainsi prélevés ;
   – à passer à l'étage d'extraction suivant en faisant s'écouler depuis un des réservoirs (19,20), une quantité donnée de solvant à un degré de pureté supérieur à celui précédemment prélevé.

3. Procédé de traitement des eaux ammoniacales selon les revendications 1 et 2, caractérisé par le fait que la phase d'extraction en continu consiste :
   – à pulvériser l'eau, sortant du dernier étage de la phase d'extraction en discontinu, au-dessus d'un plateau (30) situé en tête de colonne de distillation (29) de manière à réaliser un quensch consistant à mettre en contact cette eau avec le solvant régénéré et à l'état vapeur ;
   – à prélever en continu le mélange eau/solvant du plateau (30) pour l'envoyer dans un décanteur (31) ;
   – à soutirer de ce décanteur (31) l'eau semi-épurée (5) pour l'injecter dans une colonne de stripping (6) ou directement dans une unité de cristallisation (8) ;
   – à récupérer le solvant chargé d'une faible quantité d'impuretés à la partie supérieure (32) du décanteur (31) et à l'injecter dans un des réservoirs (19,20).

4. Procédé de traitement des eaux ammoniacales selon les revendications 2 et 3, caractérisé par le fait que le solvant effectue un trajet en sens opposé à celui de l'eau ammoniacale et qu'au Nième étage d'extraction le solvant utilisé provient du N + lième étage du cycle d'extraction précédent.

5. Procédé de traitement des eaux ammoniacales selon la revendication 1, caractérisé par le fait que l'étape de cristallisation de l'eau (7) sortant soit directement de l'opération d'extraction au solvant, soit après passage dans une unité de stripage, consiste :

– à introduire une quantité donnée de cette eau (7) dans un raffineur (52) ;

– à refroidir ce dernier au moyen d'un fluide thermique de manière à atteindre un taux volumique de cristaux donné ;

– à procéder à l'opération d'égouttage (64) qui consiste à prélever du raffineur (52) la phase liquide ;

– à provoquer une fusion partielle (62) de ces cristaux ;

– à effectuer une ou plusieurs séquences de lavage (55, 56) des cristaux contenus dans le raffineur (52) au moyen de l'eau de production purifiée (10) ;

– à réchauffer le raffineur (52) dans le but de fondre les cristaux, le liquide ainsi obtenu correspondant à l'eau de production ;

– à envoyer les rejets (9) de ces cycles de cristallisation vers une unité de sulfatation.

6. Procédé de traitement selon la revendication 5, caractérisé par le fait que pour une cristallisation à plusieurs séquences de lavage, l'eau de production servant au lavage à la Nième séquence provient de la N + lième séquence de lavage du cycle de cristallisation précédent.

7. Installation permettant de mettre en oeuvre le procédé de traitement des eaux ammoniacales, selon les revendications 1 à 6, caractérisé en ce qu'elle est composée :

– d'une unité d'extraction au solvant (4) formée par un ensemble d'extraction en discontinu (15) à un ou plusieurs étages et d'un dispositif d'extraction en continu (16) à un seul étage ;

– d'un circuit de régénération (12) du solvant comportant une colonne de distillation (29) d'où est prélevé un résidu (14) correspondant aux HAP et autres impuretés organiques extraites des eaux ammoniacales ;

– d'une colonne de stripage (6) pour éliminer l'ammoniaque à l'état libre, l'H$_2$S, le CO$_2$ et autres ;

– d'une unité de cristallisation (8) assurant, d'une part, l'élimination des impuretés restantes à forte concentration de sels et, d'autre part, la production d'eau purifiée (10) ayant perdu toute agressivité chimique.

8. Installation selon la revendication 7, caractérisée par le fait que l'ensemble d'extraction en discontinu (15) est formé par une colonne (26) comportant à sa partie inférieure un réservoir (28) dans lequel est introduite l'eau sortant du dernier étage de la phase d'extraction en discontinu, ce réservoir (28) est surmonté de l'enceinte d'extraction (18) au-dessus de laquelle est disposé un réservoir de stockage (17) d'eau ammoniacale filtrée (3), cette colonne (26) comporte, en outre, dans sa partie médiane (27), plusieurs réservoirs de solvant (19,20) dont le nombre est égal ou supérieur à celui des étages d'extraction en discontinu, immédiatement au-dessus de ces réservoirs (19,20) étant disposé le décanteur (31) duquel est soutirée l'eau semi-épurée (5), de plus, ladite colonne (26) est pourvue, à son extrémité supérieure (25) du réservoir-décanteur (24) dans lequel est amené le mélange eau/solvant qui est réintroduit dans l'enceinte d'extraction (18) pour prélever le solvant et la phase d'insolubles contenus dans ce dernier, une conduite (24$_1$) reliée à la partie supérieure de ce réservoir décanteur (24) permettant, par ailleurs, d'évacuer le trop plein provenant de ce dernier dans ladite enceinte d'extraction (18).

9. Installation selon la revendication 7, caractérisée par le fait que la colonne de distillation (29) du circuit de régénération (12) comporte à sa base (40), une capacité (41) contenant le solvant à régénérer et dans laquelle est effectué l'appoint en solvant (42), cette capacité est surmontée, respectivement, d'un évaporateur à film tombant (43) puis d'une série de plateaux de distillation (44), sur le premier (46) de ces derniers étant prélevé le résidu correspondant aux HAP et aux autres impuretés extraites de l'eau ammoniacale, de plus, au-dessus du dernier plateau (48) est disposé un déphlegmateur (47) assurant le reflux de distillation, en tête de cette colonne de distillation (29) étant disposé le plateau (30) sur lequel est réalisé le quensch sur l'eau provenant du dernier étage de la phase d'extraction en discontinu.

10. Installation selon la revendication 7, caractérisée par le fait que l'unité de cristallisation (8) comporte, d'une part, un raffineur (52) et, d'autre part, une série de réservoirs (50,54,59,57,63) dans le réservoir (50) étant déversé l'eau d'alimentation (7) et, éventuellement, le liquide issu de l'opération d'égouttage (64) et de la fusion partielle (62) ainsi que l'eau (58) provenant de la première séquence de lavage (55) ; le liquide, s'écoulant du raffineur (52), suite à l'opération d'égouttage (64) et de la fusion partielle (62) pouvant être amené dans un réservoir indépendant (54), dans le réservoir (59) étant recueillie l'eau purifiée (10) ; l'eau ayant servi lors d'une séquence de lavage étant stockée dans les réservoirs (57) dont le nombre est égal à celui de ces séquences de lavage (55, 56) moins un ; le réservoir (63) venant à recueillir les rejets (9) sortant du raffineur (52) après concentration (60).

## Patentansprüche

1. Verfahren zur Behandlung sogenannter ammoniakhaltiger Wässer, die Unreinigkeiten, einerseits, mineraler Art, wie Ammoniak in freiem Zustand oder in Form von Sulfiden, Zyanid, Thiosulfaten, Thiozyanaten, Chloriden und dergleichen verbunden, und, andererseits, organischer Art, nämlich, Fenole und polyzyklische aromatische Kohlenwasserstoffe, oder PAK's, die in lösbarem oder unlösbarem Zustand vorhanden sind, enthalten, dadurch gekennzeichnet, daß:
  – einen Lösungsmittelextraktionsvorgang, der in zwei unterschiedliche Phasen unterteilt ist, von denen eine aus einer ein- oder mehrstufigen diskontinuierlichen Extraktion und die andere aus einer einstufigen kontinuierlichen Extraktion besteht, durchgeführt wird,
  – die Behandlung durch einen Kristallisierungsvorgang fortgesetzt wird, aus dem schließlich das unreinigkeitenfreies behandeltes Wasser entnommen wird.

2. Verfahren zur Behandlung ammoniakhaltiger Wässer nach Anspruch 1, dadurch gekennzeichnet, daß die diskontinuierliche Extraktionsphase darin besteht,
  – eine Extraktionskammer (18) mit filtriertem ammoniakhaltigem Wasser (3) zu speisen,
  – eine vorabbestimmte Menge in den Behältern (19, 20) enthaltenes Lösungsmittel, wie Zyklohexan, Benzen oder Benzol, in diese genannte Extraktionskammer (18) zu führen,
  – die also erhaltene Wasser/Lösungsmittelmischung zu rühren,
  – während dieser Rührung eine Menge Wasser/Lösungsmittelmischung mit einer geringen Flußmenge zu entnehmen, um sie in einen oberhalb der Extraktionskammer (18) befindlichen Abklärbehälter (24) zu bringen,
  – die Mischung in der Extraktionskammer (18) abklären zu lassen, sodaß drei unterschiedlichen Phasen gebildet werden, und zwar das behandelte Wasser, das Lösungsmittel und eine im Bereich der Zwischenfläche befindliche Phase unlösbarer Bestandteile,
  – das mit Unreinigkeiten beladene Lösungsmittel und die Phase unlösbarer Bestandteile durch Wassereinspritzung im Bereich des unteren Teils (22) der Extraktionskammer (18) zu entnehmen, wobei dieses Wasser vom Abklärbehälter (24) kommt und eine Unreinigkeitenkonzentration aufweist, die im wesentlichen gleich derjenigen des in der genannten Extraktionskammer (18) enthaltenen behandelten Wassers ist,
  – die also entnommenen Lösungsmittel und Phase unlösbarer Bestandteile in die Extraktionskammer (18) kronende Behälter (19, 20) zu führen,
  – zur folgenden Extraktionsstufe überzugehen, indem man eine gegebene Menge Lösungsmittel mit einem höheren Reinheitsgrad als das zuvor entnommene aus einem der Behälter (19, 20) fließen läßt.

3. Verfahren zur Behandlung ammoniakhaltiger Wässer nach Ansprüchen 1 und 2, dadurch gekennzeichnet, daß die kontinuierliche Extraktionsphase darin besteht,
  – das aus der letzten Stufe der diskontinuierlichen Extraktionsphase kommende Wasser oberhalb einer sich am oberen Teil der Destillationssäule (29) befindlichen Platte (30) zu zerstäuben, sodaß ein Abschrecken erfolgt, das darin besteht, dieses Wasser mit dem regenerierten und in Dampfzustand befindlichen Lösungsmittel in Berührung zu bringen,
  – die Wasser/Lösungsmittelmischung kontinuierlich von der Platte (30) zu entnehmen, um sie in ein Abklärgerät (31) zu führen,
  – das halbgereinigte Wasser (5) aus diesem Abklärgerät (31) abzuziehen, um es in eine Stripperkolonne (6) oder direkt in eine Kristallisationseinheit (8) einzuspritzen,
  – das mit einer geringen Menge Unreinigkeiten beladene Lösungsmittel am oberen Teil (32) des Abklärgeräts (31) zurückzugewinnen und es in einen der Behälter (19, 20) einzuspritzen.

4. Verfahren zur Behandlung ammoniakhaltiger Wässer nach Ansprüchen 2 und 3, dadurch gekennzeichnet, daß das Lösungsmittel einen Weg in Gegenrichtung zum ammoniakhaltigen Wasser folgt und daß das verwendete Lösungsmittel, in der Nten Extraktionsstufe, von der N+1ten Stufe des vorigen Extraktionszyklus kommt.

5. Verfahren zur Behandlung ammoniakhaltiger Wässer nach Anspruch 1, dadurch gekennzeichnet, daß die Stufe der Kristallisation des entweder direkt vom Lösungsmittelextraktionsvorgang oder nach Durchgang durch eine Strippereinheit kommenden Wassers (7) darin besteht,
  – eine gewisse Menge dieses Wassers (7) in einen Raffineur (52) zu führen,
  – diesen letzten mittels eines Wärmefluidums so zu erhitzen, daß ein gegebenes Kristallvolumenverhältnis erhalten wird,
  – den Entwässerungsvorgang (64), der darin besteht, die flüssige Phase aus dem Raffineur (52) zu entnehmen, vorzunehmen,
  – eine Teilschmelzung (62) dieser Kristalle zu verursachen,
  – eine oder mehrere Waschungen (55, 56) der im Raffineur (52) enthaltenen Kristalle mittels des gereinigten Produktionswassers (10) durchzuführen,

– den Raffineur (52) zwecks der Schmelzung der Kristalle zu erhitzen, wobei die also erhaltene Flüssigkeit dem Produktionswasser entspricht,

– die Rückstände (9) dieser Kristallisationszyklen zu einer Sulfatierungseinheit zu leiten.

6. Verfahren zur Behandlung ammoniakhaltiger Wässer nach Anspruch 5, dadurch gekennzeichnet, daß, für eine Kristallisation mit mehreren Waschvorgängen, das in der Nten, Stufe für die Waschung dienende Produktionswasser vom N+1ten Waschvorgang des vorigen Kristallisationszyklus kommt.

7. Anlage, die es erlaubt, das Verfahren zur Behandlung ammoniakhaltiger Wässer nach Ansprüchen 1 bis 6 anzuwenden, dadurch gekennzeichnet, daß sie besteht aus:

– einer aus einem ein- oder mehrstufigen diskontinuierlichen Extraktionsaggregat (15) und einer einstufigen kontinuierlichen Extraktionsvorrichtung (16) gebildeten Lösungsmittelextraktionseinheit (4),

– einem Lösungsmittelregenerierungskreis (12), der eine Destillationssäule (29) umfaßt, aus der ein den aus den ammoniakhaltigen Wässern extrahierten PAK's und sonstigen organischen Unreinigkeiten entsprechender Rückstand (14) entnomen wird,

– einer Stripperkolonne (6) zur Ausscheidung von Ammoniak in freiem Zustand, $H_2S$, $CO_2$ und dergleichen,

– einer Kristallisationseinheit (8), die, einerseits, die Ausscheidung der überbleibenden Unreinigkeiten mit hoher Salzenkonzentration und, anderseits, die Produktion gereinigtes Wassers (10), das seine ganze chemische Aggressivität verloren hat, sichert.

8. Anlage nach Anspruch 7, dadurch gekennzeichnet, daß das diskontinuierliche Extraktionsaggregat (15) aus einer Kolonne (26), die an ihrem unteren Teil einen Behälter (28) umfaßt, in den das von der letzten Stufe der diskontinuierlichen Extraktionsphase kommende Wasser geführt wird, gebildet ist, daß dieser Behälter (28) mit der Extraktionskammer (18) gekront ist, oberhalb der ein Auflagerungsbehälter (17) für filtriertes ammoniakhaltiges Wasser (3) angeordnet ist, daß diese Kolonne (26) außerdem, in ihrem Mittelteil (27), mehrere Lösungsmittelbehälter (19, 20) umfaßt, deren Anzahl gleich derjenigen oder größer als diejenige der diskontinuierlichen Extraktionsstufen ist, wobei unmittelbar oberhalb dieser Behälter (19, 20) das Abklärgerät (31) angeordnet ist, aus dem das halbgereinigte Wasser (5) abgezogen wird, daß die genannte Kolonne (26) an ihrem Oberende (25) mit dem Abklärbehälter (24) versehen ist, in den die Wasser/Lösungsmittelmischung geführt wird, die aufneu in die Extraktionskammer (18) eingeführt wird, um die in dieser letzten enthaltenen Lösungsmittel und Phase unlösbarer Bestandteile zu entnehmen, wobei eine mit dem oberen Teil dieses Abklärbehälters (24) verbundene Leitung (24_1) es außerdem erlaubt, die aus diesem letzten kommende Überfülle in die genannte Extraktionskammer (118) abzuleiten.

9. Anlage nach Anspruch 7, dadurch gekennzeichnet, daß die Destillationssäule (29) des Regenerierungskreises (12) an ihrer Basis (40) eine Kapazität (41) umfaßt, die das zu regenerierende Lösungsmittel enthält und in der die Lösungsmittelnachfüllung (42) erfolgt, daß diese Kapazität respektive mit einem Fallfilmverdampfer (43), danach mit einer Reihe Destillationsplatten (44) gekrönt ist, wobei der den aus dem ammoniakhaltigen Wasser extrahierten PAK's und den übrigen Unreinigkeiten entsprechende Rückstand an der ersten (46) dieser Platten entnommen wird, daß außerdem oberhalb der letzten Platte (48) ein Dephlegmator (47) angeordnet ist, der den Destillationsrücklauf sichert, wobei am oberen Teil dieser Destillationssäule (29) die Platte (30) angeordnet ist, auf der das Erschrecken auf dem von der letzten Stufe der diskontinuierlichen Extraktionsphase kommenden Wasser durchgeführt wird.

10. Anlage nach Anspruch 7, dadurch gekennzeichnet, daß die Kristallisationseinheit (8), einerseits, einen Raffineur (52) und, andererseits, eine Reihe Behälter (50, 54, 59, 57, 63) umfaßt, wobei das Speisungswasser (7) und, gegebenenfalls, die aus dem Entwässerungsvorgang (64) und der Teilschmelzung (62) entstehende Flüssigkeit sowie das vom ersten Waschvorgang (55) kommende Wasser in den Behälter (50) geführt werden und die zufolge des Entwässerungsvorgangs (64) und der Teilschmelzung (62) aus dem Raffineur (52) fließende Flüssigkeit in einen unabhängigen Behälter (54) geleitet werden kann, wobei das gereinigte Wasser (10) in den Behälter (59) aufgefangen wird und das Wasser, das während einem Waschvorgang gebraucht worden ist, in den Behältern (57) aufgelagert wird, deren Anzahl gleich derjenigen dieser Waschvorgänge (55, 56) abzüglich eins ist und der Behälter (63) die nach Konzentration (60) aus dem Raffineur (52) kommenden Rückstände (9) auffängt.

**Claims**

1. Process for the treatment of so-called ammoniacal waters, containing impurities of, on the one hand, a mineral nature, such as ammonia in the free state or combined in form of sulphides, cyanide, thiosulphates, thiocyanates, chlorides and the like and, on the other hand, an organic nature, viz., phenols and polycyclic aromatic hydrocarbons, or PAH's, present in soluble or insoluble state, characterized in that:

– there is carried out a solvent extraction operation subdivided into two distinct phases, one of which consisting of a single- or multiple-stage discontinuous extraction and the other one of a single-stage continuous extraction;

– the treatment is continued by a crystallization operation from which is finally taken off the treated water free of impurities.

2. Process for the treatment of ammoniacal waters according to claim 1, characterized in that the discontinuous extraction phase consists in:

– supplying an extraction enclosure (18) with filtered ammoniacal water (3),

– introducing into that very extraction enclosure (18) a pre-established quantity of solvent, such as cyclohexane, benzene or benzol, contained in tanks (19, 20),

– stirring the thus obtained water/solvent mixture,

– taking off, at a low rate, during this stirring, a quantity of water/solvent mixture in order to bring same into a decanting tank (24) located above the extraction enclosure (18),

– letting the mixture in the extraction enclosure (18) decant, so as to form three distinct phases, i.e., the treated water, the solvent and a phase of insoluble constituents located at the level of the interface,

– taking off the solvent loaded with impurities and the insoluble constituent phase by injecting water at the level of the lower portion (22) of the extraction enclosure (18), this water coming from the decanting tank (24) and having an impurity concentration substantially equal to that of the treated water contained in said extraction enclosure (18),

– introducing into tanks (19, 20) topping the extraction enclosure (18) the thus taken off solvent and insoluble constituent phase,

– having a given quantity of solvent with a degree of purity higher than that previously taken off pass to the next extraction stage by having same flow from one of the tanks (19, 20).

3. Process for the treatment of ammoniacal waters according to claims 1 and 2, characterized in that the continuous extraction phase consists in:

– atomizing the water coming out of the last stage of the discontinuous extraction phase above a plate (30) located at the top of the distillation tower (29), so as to carry out a quench consisting in bringing this water into contact with the regenerated solvent at the vapour state,

– continuously taking off the water/solvent mixture from the plate (30) to send same into a decanter (31),

– drawing off from this decanter (31) the semi-purified water (5) to inject same into a stripping tower (6) or directly into a crystallization unit (8),

– recovering the solvent loaded with a small quantity of impurities at the top (32) of the decanter (31) and in injecting same into one of the tanks (19, 20).

4. Process for the treatment of ammoniacal waters according to claims 2 and 3, characterized in that the solvent follows a path in an opposite direction to that of the ammoniacal water and that at the Nth extraction stage, the solvent used comes from the N+1th stage of the previous extraction cycle.

5. Process for the treatment of ammoniacal waters according to claim 1, characterized in that the step of crystallization of the water (7) coming either directly from the solvent extraction operation or after passing into a stripping unit consists in:

– introducing a given quantity of this water (7) into a refiner (52),

– cooling down this latter by means of a thermal fluid, so as to reach a given crystal volume-ratio,

– proceeding to the draining operation (64) which consists in taking off the liquid phase from the refiner (52),

– causing a partial melting (62) of these crystals,

– carrying out one or several operations (55, 56) of washing the crystals contained in the refiner (52) with purified production water (10),

– heating the refiner (52) with a view to melt the crystals, the thus obtained liquid corresponding to the production water,

– sending the residues (9) of these crystallization cycles to a sulphation unit.

6. Process for the treatment of ammoniacal waters according to claim 5, characterized in that, for a crystallization with several washing operations, the production water serving for the washing at the Nth operation comes from the N+1th washing operation of the previous crystallization cycle.

7. Plant allowing the implementation of the process for the treatment of ammoniacal waters according to claims 1 through 6, characterized in that it is comprised of:

– a solvent extraction unit (4) formed of a single- or multi-stage discontinuous extraction unit (15) and a single-stage continuous extraction device (16),

– a solvent regeneration circuit (12) comprising a distillation tower (29) from which is taken off a residue (14) corresponding to the PAH's and other organic impurities extracted from the ammoniacal waters,

– a stripping tower (6) to remove ammonia at the free state, $H_2S$, $CO_2$ and the like,

– a crystallization unit (8) ensuring, on the one hand, the removal of the remaining impurities with high salt-concentrations and, on the other hand, the production of purified water (10) having lost any chemical aggressivity.

8. Plant according to claim 7, characterized in that the discontinuous extraction unit (15) consists of a tower (26) comprising, at its bottom, a tank (28) into which is introduced the water coming from the last stage of the discontinuous extraction phase, that this tank (28) is topped by the extraction enclosure (18) above which is arranged a storage tank (17) for filtered ammoniacal water (3), that this tower (26) furthermore comprises, in its median portion (27), several solvent tanks (19, 20), the number of which is equal to or larger than that of the discontinuous extraction stages, immediately above these tanks (19, 20) being arranged the decanter (31) from which is drawn off the semi-purified water (5), that, furthermore, said tower (26) is provided, at its upper end (25) with the decanting tank (24) into which is brought the water/ solvent mixture which is re-introduced into the extraction enclosure (18) in order to take off the solvent and the insoluble constituent phase contained in this latter, a conduit ($24_1$) connected to the top of this decanting tank (24) furthermore allowing to evacuate the overflow coming from the latter into said extraction enclosure (18).

9. Plant according to claim 7, characterized in that the distillation tower (29) of the regeneration circuit (12) comprises, at its base (40), a capacity (41) containing the solvent to be regenerated and in which occurs the addition of solvent (42), that this capacity is topped by a falling film evaporator (43), then by a series of distillation plates (44), respectively, on the first (46) of these latter being taken off the residue corresponding to the PAH's and to the other impurities extracted from the ammoniacal water, that, furthermore, above the last plate (48) is arranged a dephlegmator (47) ensuring the distillation reflux, at the top of this distillation tower (29) being arranged the plate (30) on which is carried out the quench on the water coming from the last stage of the discontinuous extraction phase.

10. Plant according to claim 7, characterized in that the crystallization unit (8) comprises, on the one hand, a refiner (52) and, on the other hand, a series of tanks (50, 54, 59, 57, 63), into tank (50) being poured the supply water (7) and, eventually, the liquid coming from the draining operation (64) and the partial melting (62) as well as the water (58) coming from the first washing operation (55), whereby the liquid flowing out of the refiner (52) further to the draining operation (64) and the partial melting (62) may be brought into an independent tank (54), in the tank (59) being collected the purified water (10), the water having served during a washing operation being stored in the tanks (57) the number of which is equal to that of these washing operations (55, 56) less one, the tank (63) receiving the residues (9) coming from the refiner (52) after concentration (60).

# FIG. 1

# FIG. 2

FIG. 3

FIG. 4

FIG. 5